# FASCICULE DE BREVET EUROPEEN

(11) **EP 0 545 813 B1**
(45) Date de publication et mention de la délivrance du brevet: **01.03.1995**
(21) Numéro de dépôt: 92403253.5
(22) Date de dépôt: 02.12.1992
(51) Int. Cl.: B60K 15/05

(54) **Dispositif pour la fermeture de la canalisation de remplissage du réservoir de carburant d'un véhicule automobile**
Verschlussvorrichtung für den Einfüllstutzen des Brennstofftankes eines Automobiles
Seal for the filler neck of the fuel tank of an automobile

(30) Priorité: 06.12.1991 FR 9115161
(43) Date de publication de la demande: 09.06.1993
(73) Titulaire: PAUL JOURNEE S.A., F-92700 Colombes (FR)
(72) Inventeur: Journee, Maurice, F-60240 Reilly (FR)
(74) Mandataire: Lemaire, Marc

(56) Documents cités:
- DE-U- 8 426 958
- FR-A- 2 527 559
- GB-A- 2 149 447

## Description

La présente invention concerne un dispositif pour la fermeture de la canalisation de remplissage du réservoir de carburant d'un véhicule automobile.

L'invention concerne plus particulièrement un dispositif du type dans lequel l'extrémité ouverte de la canalisation est agencée dans un renfoncement de la carrosserie du véhicule et est équipée d'un bouchon de fermeture qui comporte des moyens de fixation et de verrouillage sur l'extrémité libre de la canalisation et qui comporte, de manière à former un sous-ensemble, une plaque qui, en position fermée du bouchon, masque au moins en partie le renfoncement de la carrosserie et s'étend à cet effet sensiblement en affleurement de la peau extérieure de la carrosserie qui délimite le renfoncement.

Un dispositif de ce type est connu de l'état de la technique et est utilisé sur certains véhicules.

Lorsque le conducteur procède à l'ouverture du bouchon afin de remplir le réservoir, il doit le déverrouiller à l'aide d'une clé et il se retrouve alors à tenir en main un sous-ensemble constitué pour l'essentiel du bouchon, de son mécanisme de verrouillage et de la plaque périphérique de masquage, le tout étant tenu par l'intermédiaire de la clé de déverrouillage.

L'utilisation d'un tel sous-ensemble est donc peu pratique car le conducteur doit soit le conserver en main, ce qui rend peu aisé ses manoeuvres pour le remplissage du réservoir, soit le poser à terre, ou sur une partie de la carrosserie du véhicule, ce qui a pour inconvénient de risquer de provoquer un endommagement du dispositif de fermeture et/ou de la carrosserie du véhicule. D'autre part un dispositif selon la première partie de la revendication 1 est décrit dans le document GB-A-2 149 447.

La présente invention a donc pour but de proposer un perfectionnement de ce type de dispositif.

Dans ce but l'invention propose un dispositif de fermeture de la canalisation de remplissage du réservoir de carburant d'un véhicule automobile, du type dans lequel l'extrémité ouverte de la canalisation est agencée dans un renfoncement de la carrosserie du véhicule et est équipée d'un bouchon de fermeture qui comporte des moyens de fixation et de verrouillage sur l'extrémité libre de la canalisation et qui comporte une plaque qui, en position fermée du bouchon, masque au moins en partie le renfoncement de la carrosserie et s'étend en affleurement de la peau extérieure de la carrosserie qui délimite le renfoncement, ledit dispositif comprenant des moyens d'articulation du bouchon entre une position fermée et une position ouverte constitués d'une embase montée dans le renfoncement de la carrosserie et sur laquelle le bouchon est monté articulé, caractérisé en ce que l'embase est traversée par la portion d'extrémité de la canalisation de remplissage et en ce qu'elle est maintenue axialement dans le renfoncement par coopération de formes complémentaires.

Grâce à un tel agencement de principe au moyen d'une embase, il est notamment rendu possible de modifier les dispositifs selon l'état de la technique afin de rendre le bouchon de fermeture solidaire de la carrosserie et sans modifier cette dernière.

Selon d'autres caractéristiques de l'invention :
- l'embase est agencée dans l'espace délimité latéralement par la paroi externe de la portion d'extrémité de la canalisation et par la portion en vis-à-vis de la carrosserie qui délimite latéralement le renfoncement ;
- les formes complémentaires sont agencées respectivement sur l'embase et sur la paroi externe de la portion d'extrémité de la canalisation, l'embase comportant à cet effet un épaulement radial interne qui coopère avec un épaulement radial externe de la portion externe d'extrémité de la canalisation et comportant un fond qui prend appui contre le fond du renfoncement ;
- dans le cas où les formes complémentaires sont agencées respectivement sur l'embase et sur la portion en vis-à-vis de la carrosserie, cette dernière délimite un bord circulaire interne qui est reçu dans une gorge radiale complémentaire de l'embase ;
- l'embase comporte une collerette périphérique qui s'étend en affleurement de la peau extérieure de la carrosserie entre le bord de la portion de la peau qui délimite le renfoncement et le bord libre de la plaque du bouchon ;
- le bouchon est monté au moyen d'une articulation d'axe sensiblement perpendiculaire à l'axe de la portion d'extrémité de la canalisation de remplissage ;
- le bouchon est articulé au moyen d'une articulation à genouillère à deux axes parallèles ;
- l'articulation est agencée entre la plaque du bouchon et l'embase ;
- le dispositif comporte des moyens élastiques de rappel du bouchon en position ouverte qui sont agencés entre la plaque du bouchon et l'embase, ou qui sont intégrés à l'articulation de la plaque sur l'embase, ou qui sont agencés entre le bouchon et la portion d'extrémité de la canalisation de remplissage ;
- l'embase et la plaque du bouchon sont réalisées en une seule pièce reliées entre elles par une zone déformable ;
- les moyens de fixation et de verrouillage du bouchon comportent un mécanisme réalisé sous la forme d'un sous-ensemble fixé de manière amovible sur la plaque, le mécanisme comportant par exemple à cet effet un corps cylindrique qui est monté par emboîtement élastique dans une jupe de montage qui s'étend axialement vers l'intérieur depuis la face interne de la plaque.

D'autres caractéristiques et avantages de l'invention apparaîtront à la lecture de la description détaillée qui va suivre pour la compréhension de laquelle on se reportera aux dessins annexés dans lesquels :
- La figure 1 est une vue en coupe axiale d'un premier mode de réalisation d'un dispositif de fermeture réalisé conformément aux enseignements de l'invention et qui est illustré en position fermée ;
- la figure 2 est une vue similaire à celle de la figure 1 sur laquelle on a illustré deux autres positions du dispositif de fermeture ;
- les figures 3 et 4 sont des vues similaires à celles des figures 1 et 2 illustrant un second mode de réalisation de l'invention ;
- les figures 5 et 6 sont des vues similaires à celles des figures 1 et 2 illustrant un troisième mode de réalisation de l'invention ;
- les figures 7 et 8 sont des vues similaires à celles des figures 1 et 2 illustrant un quatrième mode de réalisation de l'invention ;
- les figures 9 et 10 sont des vues similaires à celles des figures 1 et 2 illustrant un cinquième mode de réalisation ;
- les figures 11 et 12 sont des vues similaires à celles des figures 1 et 2 illustrant un sixième mode de réalisation de l'invention ; et
- les figures 13 et 14 sont des vues similaires à celles des figures 1 et 2 illustrant un septième mode de réalisation de l'invention.

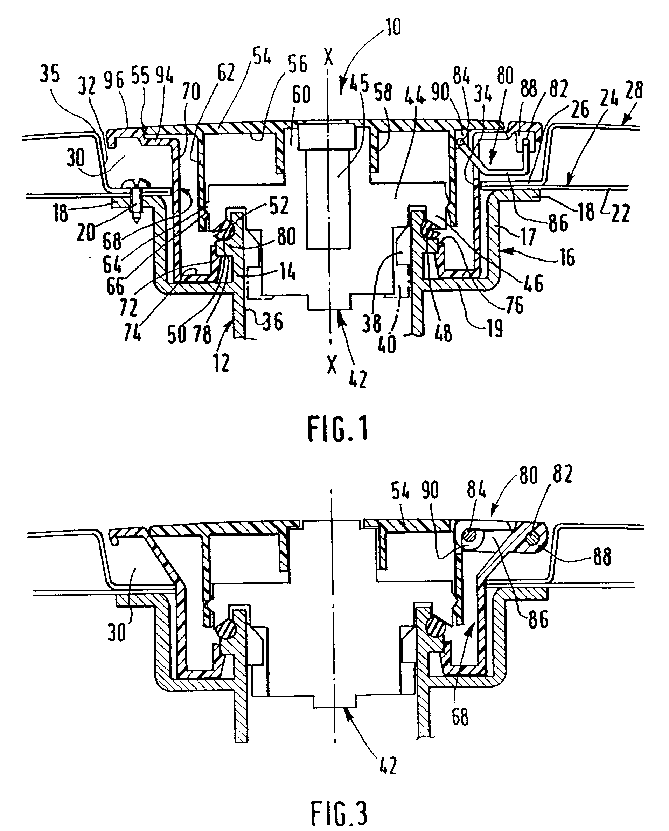

On a illustré à la figure 1 un dispositif 10 pour la fermeture étanche d'une canalisation 12 de remplissage d'un réservoir de carburant (non représenté) d'un véhicule automobile.

La canalisation 12 se termine par une portion d'extrémité cylindrique 14 d'axe X-X.

La portion 14 comporte, réalisée venue de matière par moulage, une bride latérale 16 dont la collerette d'extrémité 18 est fixée, par exemple au moyen de vis 20 contre la face interne 22 d'une tôle interne 24 de la carrosserie du véhicule.

Cette tôle interne 24 est doublée en partie par une portion 26 de la peau extérieure 28 de la carrosserie du véhicule qui constitue le fond d'un renfoncement 30 qui est délimité latéralement par une portion cylindrique 32 de la peau 28.

Les portions 24 et 26 de tôle constituent ainsi une portion de carrosserie d'épaisseur double dont le bord radial ouvert circulaire 34 s'étend sensiblement au droit de la portion cylindrique 17 de la bride 16 de la canalisation 12.

Le bord extérieur 35 de la paroi latérale 32 est un bord circulaire qui, vu de l'extérieur de la carrosserie, délimite le renfoncement 30.

Selon une technique connue, la face interne 36 de la portion d'extrémité 14 de la canalisation 12 comporte des crans ou dents 38 qui sont prévus pour coopérer avec des éléments de verrouillage complémentaires 40 d'un mécanisme de verrouillage de bouchon 42.

Le mécanisme de verrouillage comporte un corps 44 qui reçoit un verrou 45 comportant notamment un barillet.

Le corps 44 du mécanisme 42 constitue le bouchon de fermeture de la portion d'extrémité 14 de la canalisation 12.

A cet effet, il comporte notamment une jupe radiale extérieure 46 dont le bord axial interne biseauté 48 coopère avec un joint d'étanchéité 50 agencé dans une rainure 52 de la portion d'extrémité 14 de la canalisation 12.

Selon une caractéristique connue, le mécanisme de verrouillage formant bouchon 42 est équipé d'une plaque 54 qui a pour fonction, dans la position fermée du bouchon illustré à la figure 1, de masquer au moins partiellement l'évidement 30. A cet effet, la plaque 54 de contour latéral circulaire s'étend sensiblement en affleurement de la peau extérieure 28 de la carrosserie du véhicule.

La face interne 56 de la plaque 54 comporte une première jupe axiale interne 58 qui entoure la portion 60 de petit diamètre du corps 44.

La face interne 56 comporte également une seconde jupe axiale 62 qui s'étend axialement vers l'intérieur depuis la face interne 56 et qui entoure la jupe 46 du corps 44.

Le corps 44 comporte une nervure radiale externe 64 qui coopère avec un épaulement radial interne correspondant 66 de la jupe 62 de la plaque 56 de manière à relier entre eux les deux éléments par emboîtement élastique.

Le sous-ensemble constitué par le bouchon 42-44 et la plaque de masquage 54 est monté articulé sur la carrosserie du véhicule.

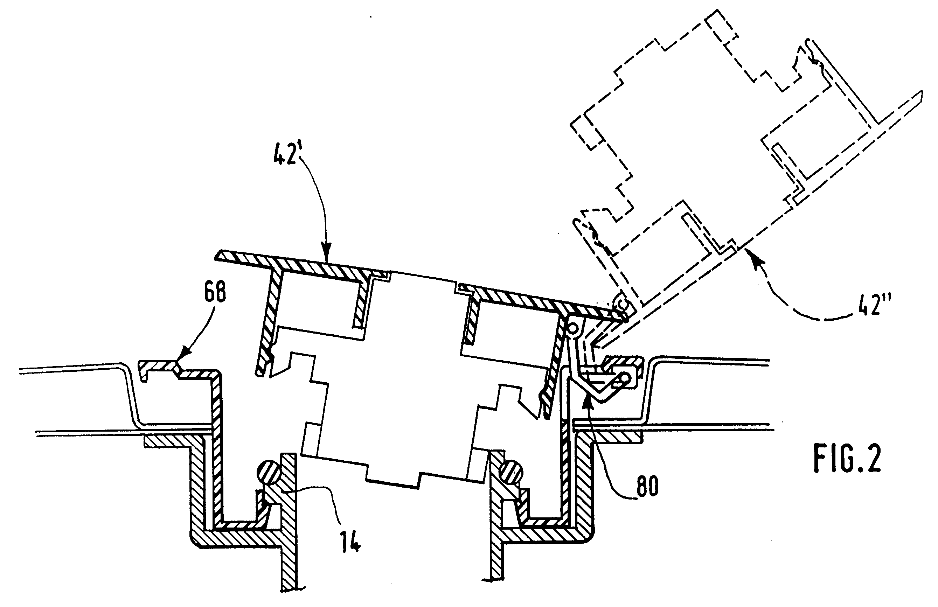

Dans le mode de réalisation illustré aux figures 1 et 2, le sous-ensemble est monté articulé sur la carrosserie par l'intermédiaire d'une embase 68.

L'embase 68 est une pièce de forme de révolution qui comporte une première jupe cylindrique agencée radialement à l'extérieur 70 et une jupe interne 72 reliées entre elles par un fond radial 74.

Le fond 74 prend appui contre la portion radiale 19 de la bride 16 de la canalisation 14 qui constitue un fond pour le logement 30.

Le bord axial d'extrémité 76 de la jupe 72 est monté emboîté contre la face en vis-à-vis 78 d'un épaulement radial externe 80 de la portion d'extrémité 14 qui délimite en partie la gorge 52.

La dimension radiale extérieure de la jupe 70 est conçue de manière à permettre sa mise en place dans le logement 30 à travers l'ouverture délimitée par le bord radial interne 34 des pièces en tôle de la carrosserie. L'embase 68 est par exemple réalisée en matière plastique et peut être mise en place autour de la portion d'extrémité 14 par emboîtement élastique.

Dans le mode de réalisation illustré aux figures 1 et 2, le bouchon 42 est articulé directement sur l'embase 68 au moyen d'une articulation à genouillère 80 à deux axes d'articulation parallèles 82 et 84 qui s'étendent selon une direction sensiblement perpendiculaire à l'axe X-X de la portion d'extrémité 14 de la canalisation 12.

L'articulation 80 est par exemple constituée par un élément en fil métallique plié 86 dont les extrémités, qui constituent respectivement les axes 82 et 84, sont fixées d'une part sur une patte 88 de l'embase 68, et d'autre part sur une patte interne 90 de la plaque 54.

Afin de permettre les débattements de l'articulation 80, l'élément en fil 86 s'étend à travers une fente 90 formée en partie dans la jupe radiale extérieure 70 de l'embase ainsi qu'en partie dans la collerette 94 de l'embase qui se prolonge radialement par une portion plane annulaire 96.

La portion annulaire 96 s'étend en affleurement de la peau de la carrosserie 28 et de la face extérieure de la plaque 54 dans l'espace radial délimité d'une part par le bord circulaire 35 de la peau de la carrosserie et d'autre part par le bord circulaire 55 de la plaque 54.

En position fermée, l'évidement 30 est ainsi pratiquement complètement masqué, d'une part par la plaque 54, et d'autre part par la portion annulaire 96 de la collerette 94 de l'embase 68.

On a illustré à la figure 2 une position intermédiaire 42' du bouchon que ce dernier occupe immédiatement après son ouverture, ainsi que la position finale ouverte 42'' dans laquelle la portion d'extrémité 14 de la canalisation 12 est entièrement dégagée afin de permettre le remplissage du réservoir. Le dégagement est rendu possible par l'utilisation d'une articulation à genouillère.

L'invention peut prévoir des moyens de rappel élastique du bouchon vers sa position ouverte 42''.

Selon une technique connue, les moyens de rappel élastique peuvent être constitués par l'élément en fil métallique 86 proprement dit qui peut être conçu de manière que, en position fermée, il soit légèrement précontraint élastiquement pour provoquer l'ouverture automatique dès que le bouchon est déverrouillé.

Comme on peut le constater à la figure 2, l'utilisateur, lorsqu'il ouvre le bouchon 42, n'a plus besoin de le tenir en main car il demeure relié à la structure du véhicule par son articulation 80 sur l'embase 68.

L'embase 68 et la plaque 54 qui lui est reliée par l'articulation 80 peuvent être réalisées sous la forme d'un sous-ensemble autonome et commercialisées comme une pièce de rechange que le conducteur d'un véhicule équipé d'un bouchon de fermeture selon l'état de la technique peut venir mettre en lieu et place du bouchon utilisé précédemment.

A cet effet, le conducteur ôte le mécanisme de verrouillage 42 du bouchon amovible qu'il utilisait précédemment et vient le mettre en place par emboîtement élastique dans la jupe 62 du nouveau sous-ensemble.

Il ne lui reste plus ensuite qu'à emboîter le tout dans le logement 30 de la carrosserie sans avoir à modifier cette dernière en aucune manière.

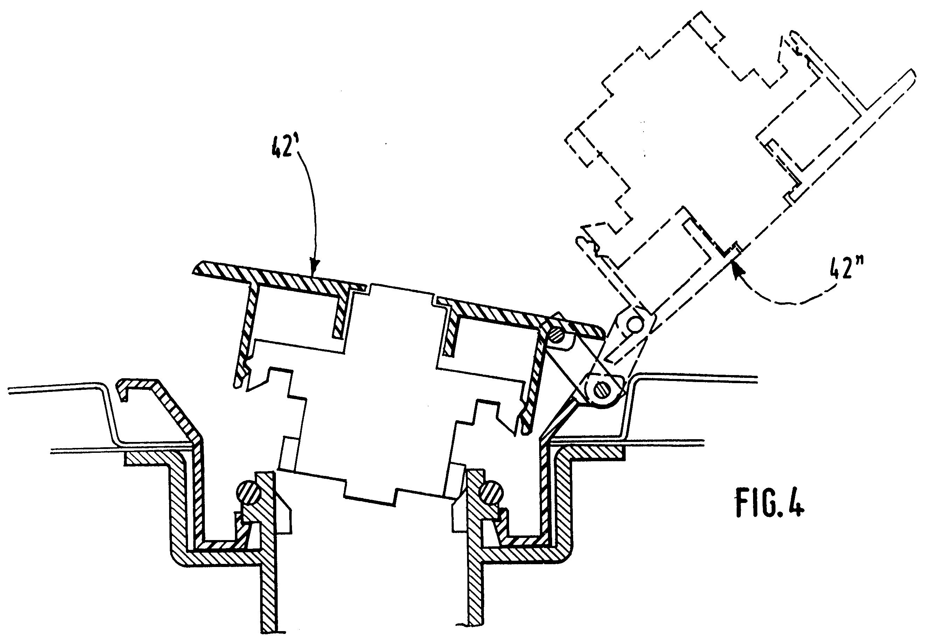

On décrira maintenant les autres modes de réalisation de l'invention en référence aux figures 3 à 14 sur lesquelles les composants identiques ou équivalents à ceux illustrés aux figures 1 et 2 sont désignés par les mêmes chiffres de référence.

Dans le deuxième mode de réalisation illustré aux figures 3 et 4, l'articulation à genouillère 80 est constituée par une biellette 86 qui est reliée respectivement à la patte 88 de l'embase 68 et à la patte 90 de la plaque 54 par deux axes 82 et 84.

La constitution de l'embase 68 est ici sensiblement identique à celle des figures 1 et 2 et son montage dans le logement 30 est notamment assuré de la même manière.

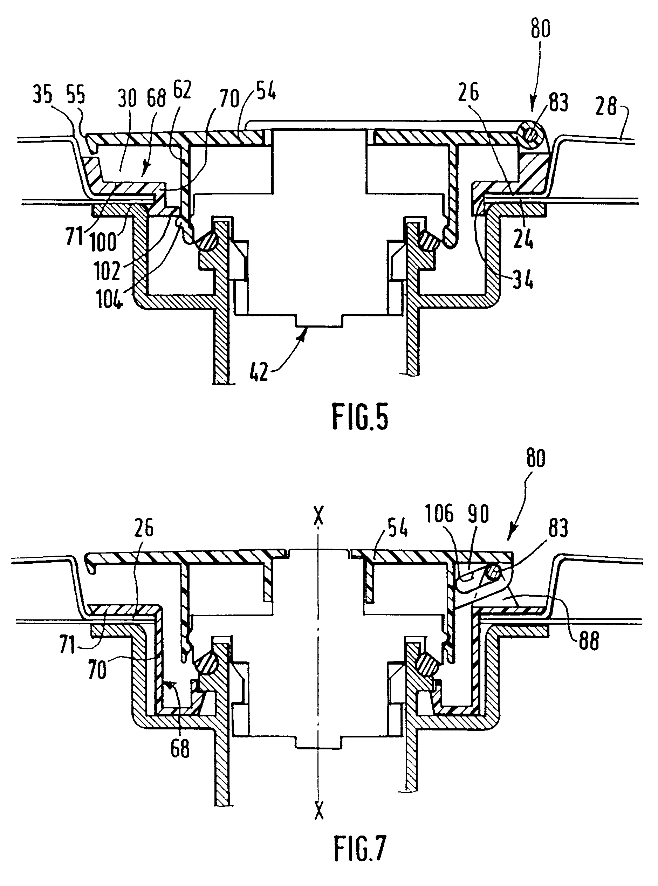

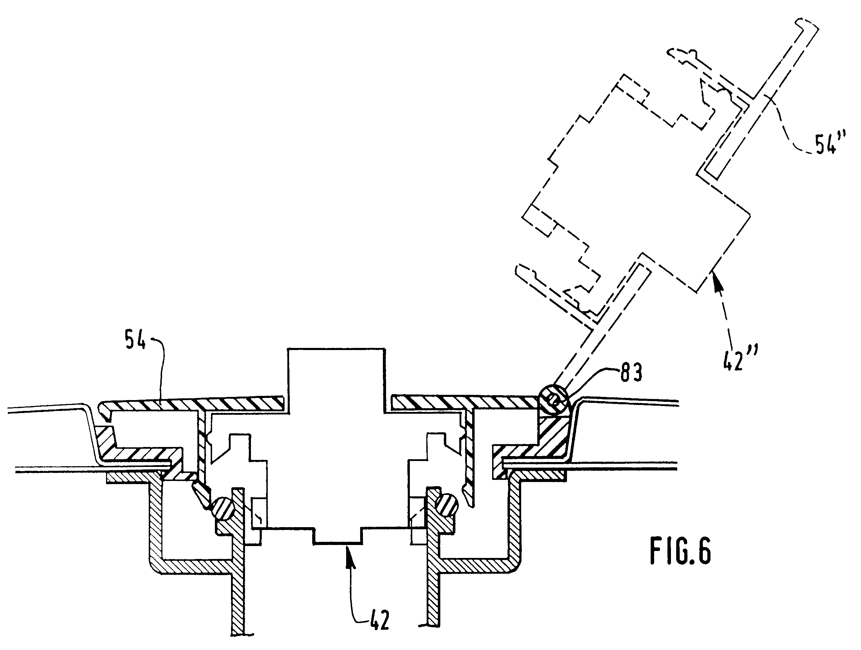

On décrira maintenant le troisième mode de réalisation illustré aux figures 5 et 6.

Dans ce troisième mode de réalisation, l'embase 68 est fixée directement sur les portions en tôles 26 et 24 de la carrosserie du véhicule.

A cet effet, l'embase 68 comporte une jupe 70 dans laquelle est formée une gorge radiale externe 100 qui est emboîtée élastiquement sur le bord circulaire 34 commun aux deux tôles coplanaires 24 et 26.

La jupe 70 se prolonge radialement vers l'extérieur par une collerette 71 qui prend appui contre la portion en vis-à-vis 26 de la tôle de la carrosserie.

L'articulation 80 est ici une articulation d'axe unique 83.

La plaque 54 s'étend radialement de manière que son bord libre circulaire 55 soit agencé sensiblement à proximité du bord circulaire 35 de la peau 28 de la carrosserie de manière à assurer le masquage de l'évidement 30.

La jupe axiale 70 de l'embase 68 peut également comporter un ergot radial interne 102 qui peut coopérer avec un renflement correspondant 104 formé sur la paroi extérieure de la jupe axiale 62 de la plaque 54 de manière à constituer un moyen de verrouillage complémentaire du bouchon 42 en position fermée.

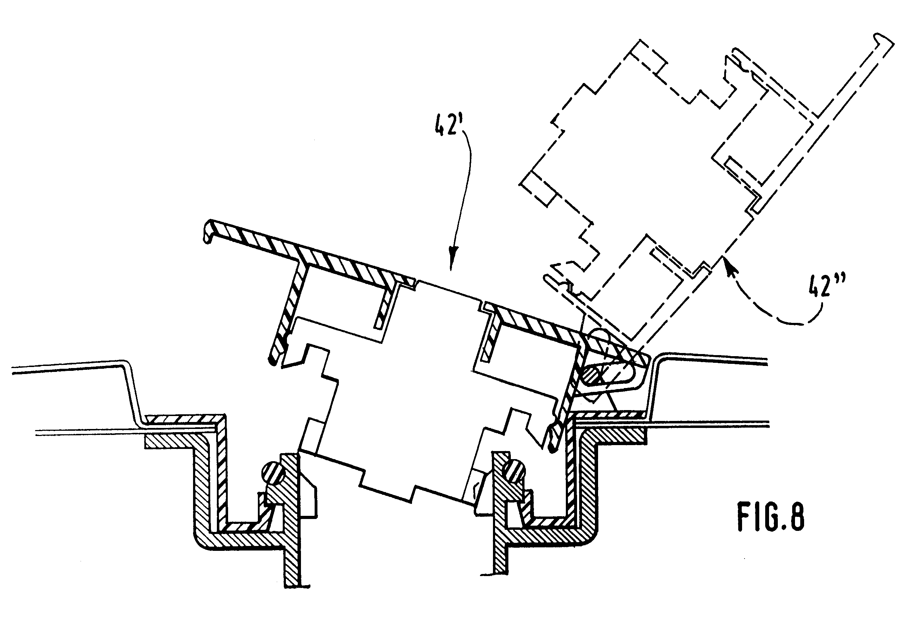

Dans le quatrième mode de réalisation illustré aux figures 7 et 8, l'embase 68 est d'une conception similaire à celle des figures 1 et 2, à l'exception de la portion annulaire 96 qui n'existe pas, la jupe axiale 70 se terminant par une collerette radiale extérieure 71 qui prend appui sur la portion de tôle 26.

L'articulation 80 est ici constituée par un axe unique 83 fixé sur une patte 88 de l'embase 70 et qui est reçue dans une fente oblongue 106 formée dans une patte interne 90 de la plaque 54.

Comme on peut le voir à la figure 8, la coopération de l'axe 83 avec la fente 106 permet les mouvements de basculement et de dégagement du bouchon lors de son pivotement autour de son axe général d'articulation perpendiculaire à l'axe X-X.

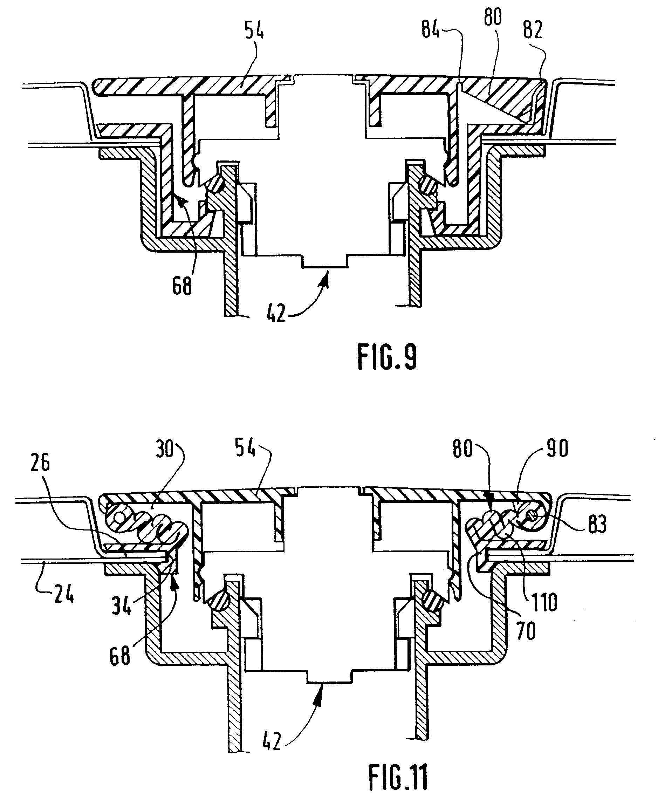

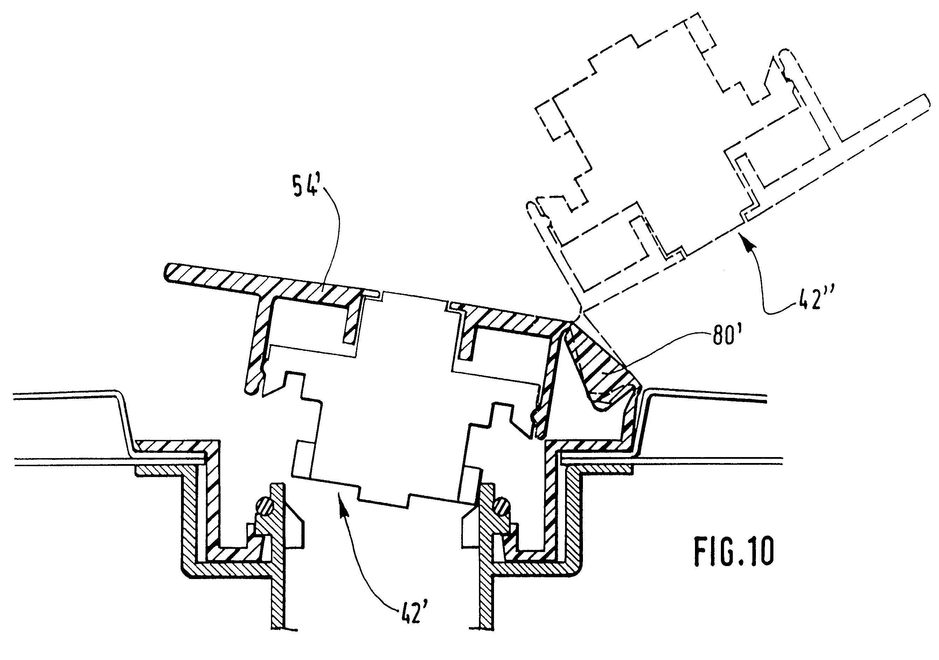

Dans le cinquième mode de réalisation illustré aux figures 9 et 10, l'embase 68 est d'une conception similaire à celle illustrée aux figures 7 et 8.

L'embase 68 et la plaque 54 sont ici réalisées sous la forme d'une pièce unique en matière plastique et sont reliées entre elles par une portion d'articulation 80, réalisée venue de matière et dont les extrémités, constituées par des portions amincies 82 et 84 constituent les axes d'articulation de la plaque 54 par rapport à l'embase 68.

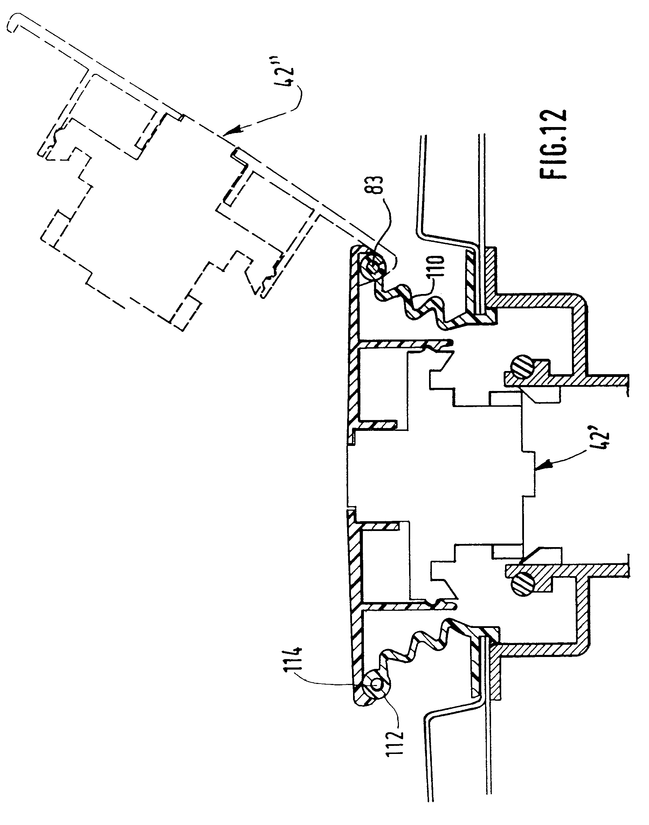

Dans le sixième mode de réalisation illustré aux figures 11 et 12, l'embase 68 est d'une conception similaire à celle illustrée aux figures 5 et 6, c'est-à-dire qu'elle est fixée par emboîtement élastique sur le bord 34 des portions de tôles 24 et 26.

Toutefois, la jupe axiale 70 se prolonge par une portion déformable élastiquement 110 réalisée en forme de soufflet qui, en position fermée illustrée à la figure 11, est comprimée dans le logement 30.

Le bord circulaire extérieur 112 du soufflet 110 peut être renforcée par un anneau métallique noyé 114 qui, dans la zone de l'articulation 80, est reçu dans une patte d'articulation 90 formée sur la face interne de la plaque 54 pour constituer l'axe d'articulation 83 de la plaque 54 sur l'embase 68.

Dans ce cas, la portion formant soufflet 110, qui est par exemple réalisée en matériau élastomère, constitue les moyens élastiques de rappel du bouchon vers sa position d'ouverture.

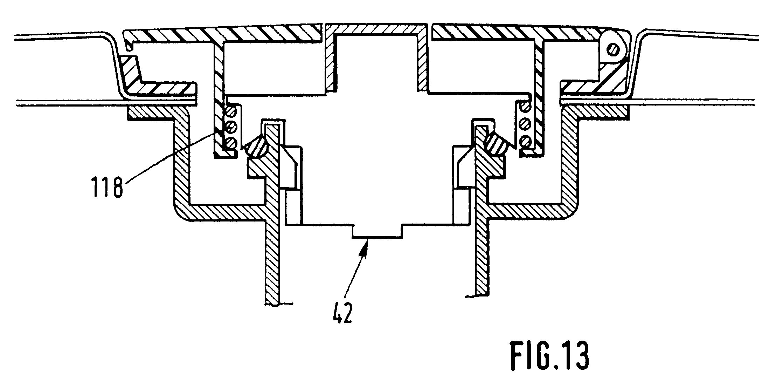

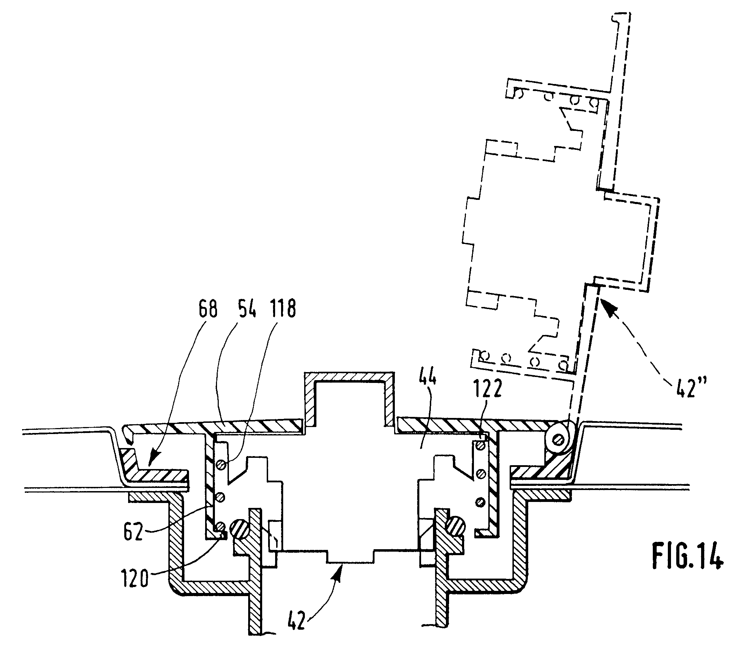

Dans le septième mode de réalisation illustré aux figures 13 et 14, l'embase 68 est d'une conception similaire à celle illustrée aux figures 5 et 6.

Dans ce mode de réalisation, les moyens élastiques de rappel en position ouverte du bouchon sont constitués par un ressort hélicoïdal de compression 118 qui prend appui axialement d'une part contre un épaulement radial interne 120 de la jupe 62 de la plaque 54 et d'autre part contre un épaulement radial externe 122 du corps 44 du mécanisme 42.

Comme dans le mode de réalisation illustré aux figures 5 et 6, l'ensemble du corps 44 est mobile axialement à l'intérieur de la jupe 62 entre une position verrouillée illustrée aux figures 5 et 13 et une position déverrouillée illustrée aux figures 6 et 14.

Le ressort 118 assure la double fonction de moyen de rappel élastique à l'ouverture et de moyen de rappel élastique du mécanisme en position déverrouillée.

## Revendications

1. Dispositif de fermeture de la canalisation (12) de remplissage du réservoir de carburant d'un véhicule automobile, du type dans lequel l'extrémité ouverte (14) de la canalisation est agencée dans un renfoncement (30) de la carrosserie (28) du véhicule et est équipée d'un bouchon de fermeture (42 - 44) qui comporte des moyens de fixation et de verrouillage sur l'extrémité libre (14) de la canalisation et qui comporte une plaque (54) qui, en position fermée du bouchon, masque au moins en partie le renfoncement (30) de la carrosserie et s'étend en affleurement de la peau extérieure (28) de la carrosserie qui délimite le renfoncement, ledit dispositif comprenant des moyens d'articulation (80) du bouchon entre une position fermée (42) et une position ouverte (42''), constitués d'une embase (68) montée dans le renfoncement (30) de la carrosserie et sur laquelle le bouchon est monté articulé, caractérisé en ce que l'embase (68) est traversée par la portion d'extrémité (14) de la canalisation de remplissage et en ce qu'elle est maintenue axialement dans le renfoncement par coopération de formes complémentaires (76, 78 - 34, 100).

2. Dispositif selon la revendication 1, caractérisé en ce que l'embase (68) est agencée dans l'espace délimité latéralement au moins partiellement par la paroi externe de la portion d'extrémité (14) de la canalisation et par la portion en vis-à-vis (32) de la carrosserie qui délimite latéralement le renfoncement (30).

3. Dispositif selon la revendication 2, caractérisé en ce que les formes complémentaires sont agencées respectivement sur l'embase (68) et sur la paroi externe de la portion d'extrémité de la canalisation.

4. Dispositif selon la revendication 3, caractérisé en ce que l'embase (68) comporte un épaulement radial interne (76) qui coopère avec un épaulement radial externe (78) de la portion d'extrémité (14) de la canalisation et comporte un fond (74) qui prend appui contre une portion radiale (19) d'une bride (16) constituant le fond du renfoncement (30).

5. Dispositif selon la revendication 2, caractérisé en ce que les formes complémentaires sont agencées respectivement sur l'embase (68) et sur ladite portion (24, 26, 34) en vis-à-vis de la carrosserie.

6. Dispositif selon la revendication 5, caractérisé en ce que ladite portion en vis-à-vis (32) de la carrosserie délimite un bord circulaire interne (34) qui est reçu dans une gorge radiale complémentaire (100) de l'embase.

7. Dispositif selon l'une quelconque des revendications 1 à 6, caractérisé en ce que l'embase (68) comporte une collerette périphérique (96) qui s'étend en affleurement de la peau extérieure de la carrosserie entre le bord (35) de la portion de la peau (28) qui délimite le renfoncement (30) et le bord libre (55) de la plaque (54) du bouchon.

8. Dispositif selon l'une quelconque des revendications 1 à 7, caractérisé en ce que le bouchon est monté au moyen d'une articulation (80) d'axe (82, 83, 84) sensiblement perpendiculaire à l'axe (X-X) de la portion d'extrémité (14) de la canalisation de remplissage.

9. Dispositif selon la revendication 8, caractérisé en ce que le bouchon est articulé au moyen d'une articulation à genouillère à deux axes parallèles (82, 84).

10. Dispositif selon l'une des revendications 8 ou 9, caractérisé en ce que l'articulation (80) est agencée entre la plaque (54) du bouchon et l'embase (68).

11. Dispositif selon l'une quelconque des revendications 1 à 10, caractérisé en ce qu'il comporte des moyens élastiques de rappel du bouchon en position ouverte.

12. Dispositif selon la revendication 11, caractérisé en ce que les moyens élastiques de rappel sont agencés entre la plaque (54) du bouchon et l'embase (68).

13. Dispositif selon la revendication 12, caractérisé en ce que les moyens élastiques de rappel sont intégrés à l'articulation (80) de la plaque (54) sur l'embase (68).

14. Dispositif selon la revendication 11, caractérisé en ce que les moyens élastiques de rappel sont agencés entre le bouchon (42) et la portion d'extrémité (14) de la canalisation de remplissage.

15. Dispositif selon l'une quelconque des revendications 1 à 13, caractérisé en ce que l'embase (68) et la plaque (54) du bouchon sont réalisées en une seule pièce reliées entre elles par une zone déformable (80).

16. Dispositif selon l'une quelconque des revendications 1 à 15, caractérisé en ce que les moyens de fixation et de verrouillage comportent un mécanisme (42) réalisé sous la forme d'un sous-ensemble fixé de manière amovible sur la plaque (54).

17. Dispositif selon la revendication 16, caractérisé en ce que le mécanisme comporte un corps cylindrique (44) qui est monté par emboîtement élastique dans une jupe de montage (62) qui s'étend axialement vers l'intérieur depuis la face interne de la plaque (54).

## Claims

1. A closure device for the filling pipe (12) of a motor vehicle fuel tank, of the type in which the open end (14) of the filling pipe is arranged in a recess (30) of the bodywork (28) of the vehicle, and is equipped with a filler cap (42-44) which includes means for fastening and locking it on to the free end (14) of the filling pipe, and which includes a plate (54) which, in the closed position of the filler cap, at least partly masks the recess (30) of the bodywork and extends flush with the outer skin (28) of the bodywork that bounds the recess, the said device comprising means (80) articulating the filler cap between a closed position (42) and an open position (42''), and comprising a base member (68) which is mounted in the recess (30) of the bodywork, and on which the filler cap is hingedly mounted, characterised in that the base member (68) is traversed by the end portion (14) of the filling pipe, and in that it is retained axially in the recess by cooperation between complementary mating profiles (76, 78-43, 100).

2. A device according to Claim 1, characterised in that the base member (68) is arranged in the space which is delimited laterally, at least partially, by the outer wall of the end portion (14) of the filling pipe and by the portion (32), in facing relationship with it, of the bodywork that bounds the recess (30) laterally.

3. A device according to Claim 2, characterised in that the complementary profiles are arranged respectively on the base member (68) and on the outer wall of the end portion of the filling pipe.

4. A device according to Claim 3, characterised in that the base member (68) includes an internal radial shoulder (76) which cooperates with an external radial shoulder (78) of the end portion (14) of the filling pipe, and comprises a base portion (74) which bears against a radial portion (19) of a flange (16) constituting the base of the recess (30).

5. A device according to Claim 2, characterised in that the complementary profiles are formed respectively on the base member (68) and on the said portion (24, 26, 34) of the bodywork in facing relationship therewith.

6. A device according to Claim 5, characterised in that the said portion (32) of the bodywork in facing relationship bounds an internal circular edge (34) which is received in a complementary radial groove (100) of the base member.

7. A device according to any one of Claims 1 to 6, characterised in that the base member (68) has a peripheral collar (96) which extends flush with the outer skin of the bodywork between the edge (35) of the portion of the skin (28) that delimits the recess (30) and the free edge (55) of the plate (54) of the filler cap.

8. A device according to any one of Claims 1 to 7, characterised in that the filler cap is mounted by means of an articulation (80) having an axis (82, 83, 84) substantially perpendicular to the axis (X-X) of the end portion (14) of the filling pipe.

9. A device according to Claim 8, characterised in that the filler cap is articulated by means of a ball and socket joint with two parallel axes (82, 84).

10. A device according to Claim 8 or Claim 9, characterised in that the articulation (80) is arranged between the plate (54) of the filler cap and the base member (68).

11. A device according to any one of Claims 1 to 10, characterised in that it includes resilient return means for returning the filler cap into its open position,.

12. A device according to Claim 11, characterised in that the resilient return means are arranged between the plate (54) of the filler cap and the base member (68).

13. A device according to Claim 12, characterised in that the resilient return means are incorporated in the articulation (80) of the plate (54) on the base member (68).

14. A device according to Claim 11, characterised in that the resilient return means are arranged between the filler cap (42) and the end portion (14) of the filling pipe.

15. A device according to any one of Claims 1 to 13, characterised in that the base member (68) and the plate (54) of the filler cap are made in one piece, being joined together through a deformable zone (80).

16. A device according to any one of Claims 1 to 15, characterised in that the fastening and locking means comprise a mechanism (42) made in the form of a sub-assembly fixed removably on the plate (54).

17. A device according to Claim 16, characterised in that the mechanism includes a cylindrical body (44) which is mounted by elastic insertion into a mounting skirt (62) which extends axially inwardly from the internal face of the plate (54).

## Patentansprüche

1. Verschlußvorrichtung für den Einfüllstutzen (12) des Kraftstofftanks eines Kraftfahrzeugs der Art, bei der das offene Ende (14) des Einfüllstutzens in einer Verstärkung (30) der Karosserie (28) des Fahrzeugs angeordnet und mit einem Verschlußdeckel (42 - 44) versehen ist, der Befestigungs- und Verriegelungsmittel am freien Ende (14) des Einfüllstutzens umfaßt und der eine Platte (54) enthält, die in geschlossener Position des Verschlußdeckels zumindest teilweise die Verstärkung (30) der Karosserie abdeckt und die sich bündig mit der Außenhaut (28) der Karosserie er streckt, welche die Verstärkung begrenzt, wobei die Vorrichtung Gelenkmittel (80) zur Anlenkung des Verschlußdeckels zwischen einer geschlossenen Position (42) und einer geöffneten Position (42'') enthält, die aus einem in der Verstärkung (30) der Karosserie eingebauten Sockel (68) bestehen, auf dem der Verschlußdeckel gelenkig angebracht ist , **dadurch gekennzeichnet,** daß der Endabschnitt (14) des Einfüllstutzens durch den Sockel (68) hindurchgeht und daß der Sockel durch das Zusammenwirken formschlüssiger Teile (76, 78 - 34, 100) axial in der Verstärkung gehalten wird.

2. Vorrichtung nach Anspruch 1 , **dadurch gekennzeichnet,** daß der Sockel (68) in dem Zwischenraum angeordnet ist, der seitlich zumindest teilweise durch die Außenwand des Endabschnitts (14) des Einfüllstutzens und durch den gegenüberliegenden Abschnitt (32) der Karosserie begrenzt wird, der seitlich die Verstärkung (30) begrenzt.

3. Vorrichtung nach Anspruch 2 , **dadurch gekennzeichnet,** daß die formschlüssigen Teile jeweils auf dem Sockel (68) und auf der Außenwand des Endabschnitts des Einfüllstutzens angeordnet sind.

4. Vorrichtung nach Anspruch 3 , **dadurch gekennzeichnet,** daß der Sockel (68) eine radiale Innenschulter (76) umfaßt, die mit einer radialen Außenschulter (78) des Endabschnitts (14) des Einfüllstutzens zusammenwirkt, wobei er außerdem einen Boden (74) umfaßt, der auf einem radialen Abschnitt (19) eines Flansches (16) zur Auflage kommt, der den Boden der Verstärkung (30) bildet.

5. Vorrichtung nach Anspruch 2 , **dadurch gekennzeichnet,** daß die formschlüssigen Teile jeweils auf dem Sockel (68) und auf dem gegenüberliegenden Abschnitt (24, 26, 34) der Karosserie angeordnet sind.

6. Vorrichtung nach Anspruch 5 , **dadurch gekennzeichnet,** daß dieser gegenüberliegende Abschnitt (32) der Karosserie eine kreisförmige Innenkante (34) begrenzt, die in einer formschlüssigen radialen Nut (100) des Sockels aufgenommen wird.

7. Vorrichtung nach einem der Ansprüche 1 bis 6, **dadurch gekennzeichnet,** daß der Sockel (68) einen Umfangsbund (96) umfaßt, der sich bündig mit der Außenhaut der Karosserie zwischen der Kante (35) des Hautabschnitts (28), der die Verstärkung (30) begrenzt, und der freien Kante (55) der Platte (54) des Verschlußdeckels erstreckt.

8. Vorrichtung nach einem der Ansprüche 1 bis 7, **dadurch gekennzeichnet,** daß der Verschlußdeckel mittels eines Gelenks (80) angebracht ist, dessen Achse (82, 83, 84) in etwa senkrecht zur Achse (X-X) des Endabschnitts (14) des Einfüllstutzens verläuft.

9. Vorrichtung nach Anspruch 8 , **dadurch gekennzeichnet,** daß der Verschlußdeckel mittels eines Kniehebelgelenks mit zwei parallelen Achsen (82, 84) angelenkt ist.

10. Vorrichtung nach einem der Ansprüche 8 oder 9, **dadurch gekennzeichnet,** daß das Gelenk (80) zwischen der Platte (54) des Verschlußdeckels und dem Sockel (68) angeordnet ist.

11. Vorrichtung nach einem der Ansprüche 1 bis 10, **dadurch gekennzeichnet,** daß sie elastische Mittel für die Rückstellung des Verschlußdeckels in seine geöffnete Position umfaßt.

12. Vorrichtung nach Anspruch 11, **dadurch gekennzeichnet,** daß die elastischen Rückstellmittel zwischen der Platte (54) des Verschlußdeckels und dem Sockel (68) angeordnet sind.

13. Vorrichtung nach Anspruch 12, **dadurch gekennzeichnet,** daß die elastischen Rückstellmittel in das Gelenk (80) der Platte (54) auf dem Sockel (68) eingebaut sind.

14. Vorrichtung nach Anspruch 11, **dadurch gekennzeichnet,** daß die elastischen Rückstellmittel zwischen dem Verschlußdeckel (42) und dem Endabschnitt (14) des Einfüllstutzens angeordnet sind.

15. Vorrichtung nach einem der Ansprüche 1 bis 13, **dadurch gekennzeichnet,** daß der Sockel (68) und die Platte (54) des Verschlußdeckels einstückig ausgeführt und durch einen verformbaren Bereich (80) miteinander verbunden sind.

16. Vorrichtung nach einem der Ansprüche 1 bis 15, **dadurch gekennzeichnet,** daß die Befestigungs- und Verriegelungsmittel einen Mechanismus (42) umfassen, der als eine abnehmbar auf der Platte (54) befestigte Baugruppe ausgeführt ist.

17. Vorrichtung nach Anspruch 16, **dadurch gekennzeichnet,** daß der Mechanismus einen zylindrischen Körper (44) umfaßt, der durch elastische Einpassung in einen Einbauschaft (62) eingesetzt ist, der sich von der Innenfläche der Platte (54) aus axial nach innen erstreckt.
